# EUROPEAN PATENT SPECIFICATION

(11) **EP 4 305 351 B1**
(45) Date of publication and mention of the grant of the patent: **09.12.2026**
(21) Application number: 22709775.5
(22) Date of filing: 02.03.2022
(51) Int. Cl.: F23G 7/06, F23J 15/02, F23J 15/04

(54) **METHOD OF COOLING AN ABATEMENT APPARATUS**
VERFAHREN ZUR KÜHLUNG EINER VERBRENNUNGSVORRICHTUNG
PROCÉDÉ DE REFROIDISSEMENT D'UN APPAREIL D'INCINÉRATION

(30) Priority: 12.03.2021 GB 202103480
(43) Date of publication of application: 17.01.2024
(73) Proprietor: Edwards Limited, Burgess Hill, Sussex RH15 9TW (GB)
(72) Inventor: SEELEY, Andrew James, Clevedon Somerset BS21 6TH (GB)
(74) Representative: Norton, Ian Andrew
(86) International application number: PCT/GB2022/050545
(87) International publication number: WO 2022/189767

(56) References cited:
- EP-A1- 3 219 380
- WO-A1-99/34899
- US-A1- 2010 116 140
- US-B2- 8 293 184

## Description

### FIELD OF THE INVENTION

The field of the invention relates to an abatement apparatus and a method.

### BACKGROUND

Abatement apparatus, such as radiant burners, are known and are typically used for treating an effluent gas stream from a manufacturing processing tool used in, for example, the semiconductor or flat panel display manufacturing industry.

During such manufacturing, residual perfluorinated compounds (PFCs) and other compounds exist in the effluent gas stream pumped from the process tool. PFCs are difficult to remove from the effluent gas and their release into the environment is undesirable because they are known to have relatively high greenhouse activity.

Known radiant burners use combustion to remove the PFCs and other compounds from the effluent gas stream, such as that described in EP 0 694 735. Typically, the effluent gas stream is a nitrogen stream containing PFCs and other compounds. The effluent stream is conveyed into a combustion chamber that is laterally surrounded by the exit surface of a foraminous gas burner. In some cases treatment materials, such as fuel gas, can be mixed with the effluent gas stream before entering the combustion chamber. Fuel gas and air are simultaneously supplied to the foraminous burner to affect combustion at the exit surface. The products of combustion from the foraminous burner react with the effluent stream mixture to combust compounds in the effluent stream.

EP 3 219 380 A1 describes an abatement device that processes process gas containing silicon and cleaning gas containing fluorine. The abatement device comprises a cooling device with a pump circulating coolant within the device. A heat exchanger cools the circulating coolant, thereby heating a cooling water flow.

Although abatement apparatus exist, they each have their own shortcomings. Accordingly, it is desired to provide an improved abatement apparatus.

### SUMMARY

According to a first aspect, there is provided a method of cooling an abatement apparatus for abatement of an effluent stream from a semiconductor processing tool, according to claim 1.

The first aspect recognizes that a problem with existing abatement apparatus configurations is that the cooling components for those abatement apparatus are typically designed to suit the conditions expected within the abatement apparatus. That cooling design is then validated through testing. Should the configuration of the abatement apparatus need to change, then a new cooling design is typically required, which also then needs to be validated. Each cooling design is therefore essentially unique, requires different parts and the underlying architecture of existing arrangements has scalability limits.

Accordingly, a method of cooling an abatement apparatus is provided. The abatement apparatus may be for abatement of an effluent stream. The effluent stream may be from a semiconductor processing tool. The method may comprise providing at least one modular cooling assembly. The modular cooling assembly may have a cooling capacity or capability. The method may comprise determining a cooling requirement of the abatement apparatus. The method may comprise incorporating into the abatement apparatus a number of the modular cooling assemblies. The number of the modular cooling assemblies may be that number whose cumulative or collective cooling capacity at least matches or achieves the cooling requirement of the abatement apparatus. In this way, multiple modular cooling assemblies may be incorporated into the abatement apparatus, each of which provides cooling capacity. The number of modular cooling assemblies can be selected to suit the cooling requirement of the abatement apparatus. This provides an architecture which is readily scalable to suit the varying cooling needs of different abatement apparatus whilst retaining a common cooling assembly which has been validated and which helps to reduce the inventory count of different parts required.

The incorporating may comprise incorporating the number of the modular cooling assemblies whose cumulative cooling capacity exceeds the cooling requirement of the abatement apparatus. Hence, typically more cooling capacity than that which is required may be incorporated into the abatement apparatus.

The incorporating comprises incorporating a plurality of the modular cooling assemblies.

The providing comprises providing each modular cooling assembly with at least one pump to recirculate coolant within the abatement apparatus to cool the abatement apparatus.

The providing may comprise providing each modular cooling assembly with a first pump configured to convey the coolant from a drain tank downstream of an abatement chamber within a first tower of the abatement apparatus to cool the abatement apparatus.

The providing may comprise providing each modular cooling assembly with a separator to separate particulates within the coolant to provide a particulate stream and a coolant stream to cool the abatement apparatus.

The providing may comprise configuring the separator to convey the particulate stream to the drain tank.

The providing comprises providing each modular cooling assembly with a heat exchanger to cool incoming coolant and provide outgoing coolant to cool the abatement apparatus.

The providing may comprise configuring the first pump, the separator and the heat exchanger in series to provide the outgoing coolant to cool the abatement apparatus.

The providing may comprise providing each modular cooling assembly with a second pump located downstream of the first pump, the separator and the heat exchanger to provide the outgoing coolant to cool the abatement apparatus.

The providing may comprise providing each modular cooling assembly with a quench sprayer located downstream of the abatement chamber and conveying the outgoing coolant to the quench sprayer to cool the first tower of the abatement apparatus.

The providing may comprise providing each modular cooling assembly with a sieve feed conduit located upstream of a sieve within a second tower of the abatement apparatus and conveying the outgoing coolant to the sieve feed conduit to cool the second tower of the abatement apparatus.

The providing may comprise conveying the outgoing coolant in a greater quantity to the quench sprayer than to the sieve feed conduit.

The providing may comprise providing each modular cooling assembly with a further pump assembly configured to receive the coolant from a sump tank within the second tower of the abatement apparatus to cool the abatement apparatus.

The providing may comprise configuring the further pump assembly to convey the coolant to a first weir of the first tower to cool the abatement apparatus.

The providing may comprise configuring the further pump assembly to convey the coolant to a second weir of the second tower to cool the abatement apparatus.

The providing may comprise conveying the coolant in a greater quantity to the second weir than to the first weir.

The further pump assembly may comprise third and fourth pumps arranged in parallel.

Each pump of the modular cooling assembly may be identical, matching, the same and/or mirrored.

The method may comprise providing the sieve with an overflow configured to convey excess head of coolant from the sieve to the sump tank.

The method may comprise providing the abatement apparatus with an effluent stream conduit fluidly coupling an above-coolant region of the drain tank with an above-coolant region of the sump tank.

The method may comprise providing the abatement apparatus with a coolant balance conduit fluidly coupling a coolant region of the drain tank with a coolant region of the sump tank.

The providing may comprise conveying the coolant in a greater quantity to the second tower than the first tower to provide a net flow of coolant through the coolant balance conduit from the second tower to the first tower.

According to a second aspect, not claimed herein, there is provided an abatement apparatus for abatement of an effluent stream from a semiconductor processing tool, the abatement apparatus having a cooling requirement and comprising: a number of modular cooling assemblies whose cumulative cooling capacity at least matches the cooling requirement of the abatement apparatus.

The number of the modular cooling assemblies may have a cumulative cooling capacity that exceeds the cooling requirement of the abatement apparatus.

The number of modular cooling assemblies may comprise a plurality of the modular cooling assemblies.

Each modular cooling assembly may comprise a first pump configured to convey the coolant from a drain tank downstream of an abatement chamber of within a first tower of the abatement apparatus to cool the abatement apparatus.

Each modular cooling assembly may comprise a separator to separate particulates within the coolant to provide a particulate stream and a coolant stream to cool the abatement apparatus.

The separator may be configured to convey the particulate stream to the drain tank.

Each modular cooling assembly may comprise a heat exchanger to cool incoming coolant and provide outgoing coolant to cool the abatement apparatus.

The first pump, the separator and the heat exchanger may be configured in series to provide the outgoing coolant to cool the abatement apparatus.

Each modular cooling assembly may comprise a second pump located downstream of the first pump, the separator and the heat exchanger to provide the outgoing coolant to cool the abatement apparatus.

Each modular cooling assembly may comprise a quench sprayer located downstream of the abatement chamber configured to convey the outgoing coolant to cool the first tower of the abatement apparatus.

Each modular cooling assembly may comprise a sieve feed conduit located upstream of a sieve within a second tower of the abatement apparatus configured to convey the outgoing coolant to cool the second tower of the abatement apparatus.

Each modular cooling assembly may be configured to convey the outgoing coolant in a greater quantity to the quench sprayer than to the sieve feed conduit.

Each modular cooling assembly may comprise a further pump assembly configured to receive the coolant from a sump tank within the second tower of the abatement apparatus to cool the abatement apparatus.

The further pump assembly may be configured to convey the coolant to a first weir of the first tower to cool the abatement apparatus

The further pump assembly may be configured to convey the coolant to a second weir of the second tower to cool the abatement apparatus.

Each modular cooling assembly may be configured to convey the coolant in a greater quantity to the second weir than to the first weir.

The further pump assembly may comprise third and fourth pumps arranged in parallel.

Each pump of the modular cooling assembly may be is identical, matching, the same and/or mirrored.

The apparatus may comprise an overflow configured to convey excess head of coolant from the sieve to the sump tank.

The apparatus may comprise an effluent stream conduit fluidly coupling an above-coolant region of the drain with an above-coolant region of the sump tank.

The apparatus may comprise a coolant balance conduit fluidly coupling a coolant region of the drain with a coolant region of the sump tank.

Each modular cooling assembly may be configured to convey the coolant in a greater quantity to the second tower than the first tower to provide a net flow of coolant through the coolant balance conduit from the second tower to the first tower.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
FIG. 1 illustrates schematically the main components of an abatement apparatus according to one embodiment;
FIG. 2 shows an alternative abatement apparatus having differing cooling requirements; and
FIG. 3 is a sectional view illustrating a combined drain chamber and sump chamber module.

### DESCRIPTION OF THE EMBODIMENTS

Before discussing the embodiments in any more detail, first an overview will be provided. Some embodiments provide a modular cooling assembly which provides for a predetermined amount of cooling for an abatement apparatus using common components. For any particular size of abatement apparatus and any particular cooling requirement, the required number of modular cooling assemblies can be determined to deliver the appropriate cooling using the same common components, rather than needing to provide a bespoke cooling assembly for each different abatement apparatus. This provides for scalability of cooling as well as helping to reduce the inventory count of the components required to provide for differing cooling requirements and simplifies maintenance.

In some embodiments, the modular cooling assembly contains one or more pumps which recirculate coolant to provide that coolant to different parts of the abatement apparatus. Typically, one or more heat exchangers is provided which cools the coolant provided from the abatement apparatus prior to recirculating the cooled coolant to different locations within the abatement apparatus. Typically, one or more separators is provided which helps to reduce the amount of particulates within the coolant prior to recirculating the coolant into the abatement apparatus. Although the modular cooling assembly may have more than one pump and/or heat exchanger and/or separators, typically each of those pumps and/or heat exchangers and/or separators is identical in order to reduce inventory.

### Abatement Apparatus

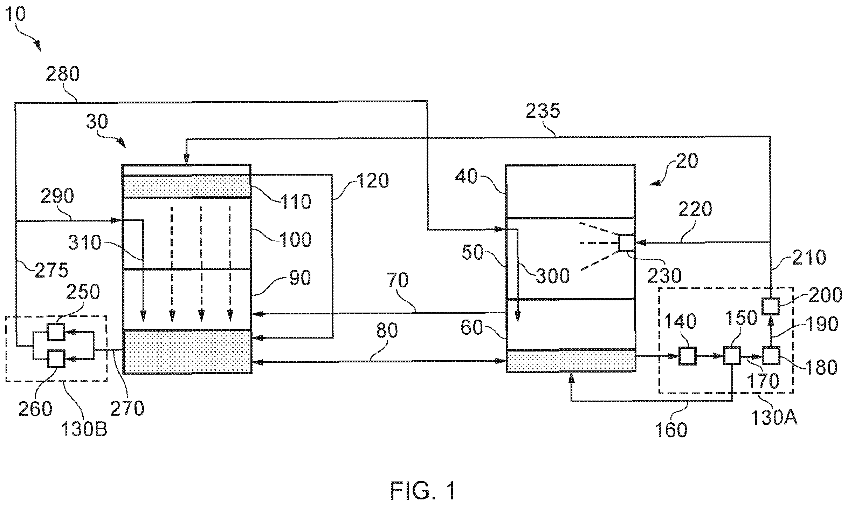

FIG. 1 illustrates schematically the main components of an abatement apparatus 10 according to one embodiment. The abatement apparatus 10 comprises a first tower 20 and a second tower 30. Although this embodiment describes the use of two towers 20, 30, it will be appreciated that a single tower or more towers could be provided.

The first tower 20 has an abatement chamber 40 which receives an effluent stream to be abated from a semiconductor processing tool, together with other abatement reagents and provides an abated effluent stream. Downstream of the abatement chamber 40 is a quench chamber 50 which receives the abated effluent stream and any combustion by-products from the abatement chamber 40 and produces a cooled treated effluent stream. Downstream of the quench chamber 50 is a drain chamber 60 which receives the cooled treated effluent stream as well as a coolant, as will be explained in more detail below. The drain chamber 60 couples with a gas conduit 70 which is located above a coolant level of the drain chamber 60 and with a coolant balance conduit 80 which is located below the coolant level within the drain chamber 60.

The gas conduit 70 couples with a sump chamber 90 located in the base of the second tower 30 above the coolant level. The coolant balance conduit 80 couples with the sump chamber 90 below the coolant level. The gas conduit 70 conveys the cooled treated effluent stream from the drain chamber 60 to the sump chamber 90. The coolant balance conduit 80 allows the coolant levels in the drain chamber 60 and the sump chamber 90 to equalize, preventing an imbalance in coolant levels between the first tower 20 and the second tower 30. As will be explained in more detail below, typically the abatement apparatus 10 is configured to convey excess coolant to the sump chamber 90 to cause a net flow of coolant from the sump chamber 90 to the drain chamber 60 via the coolant balance conduit 80, as will be explained in more detail below.

Upstream of the sump chamber 90 is a combined wet electrostatic precipitator and packed tower 100. The packed tower 100 comprises a sieve 110 which serves to irrigate the packed tower 100. Further upstream components of the second tower 30 may be provided, but these are omitted to improve clarity.

The sieve 110 is provided with apertures in its base through which coolant exits under gravity through the packed tower 100 and into the sump chamber 90. The size and quantity of apertures, together with the height of the coolant within the sieve 100, limits the flow rate of the coolant into the packed tower 100. In addition, the sieve 110 has an overflow 120 having an inlet positioned at a selected height above the perforated base of the sieve 110. The overflow 120 provides a direct path for excess coolant from the sieve 110 to the sump chamber 90.

### Modular Cooling Assembly

The abatement apparatus 10 also comprises a modular cooling assembly 130A, 130B. Although components of the modular cooling assembly 130A, 130B are illustrated schematically as being separated, it will be appreciated that this need not be the case and that they may be co-located. The modular cooling assembly 130A comprises a first pump 140 which is coupled with the drain chamber 60 below the coolant level. The first pump 140 feeds a separator, in this example a hydrocyclone 150. The hydrocyclone 150 couples via a slurry conduit 160 to the drain chamber 60. The hydrocyclone also couples with a coolant conduit 170 to a heat exchanger 180. The heat exchanger 180 couples via a coolant conduit 190 with a second pump 200. The second pump 200 pumps the coolant via a coolant conduit 210 which splits into a quench conduit 220, which couples with a quench spray assembly 230, and via a sieve feed conduit 235 which feeds the sieve 110. Although a single quench spray assembly 230 is shown, it will be appreciated that multiple quench spray assemblies 230 may be provided typically arranged circumferentially around the quench chamber 50 and fed by the quench conduit 220. The quench conduit 220 is configured to deliver a greater amount of coolant to the quench spray assembly 230 than the sieve feed conduit 240 provides to the sieve 110.

The modular cooling assembly 130B comprises a third pump 250 and a fourth pump 260. The third pump 250 and the fourth pump 260 are arranged in parallel. Both the third pump 250 and the fourth pump 260 are coupled with the sump chamber 90 and receive coolant via a feed conduit 270. The third pump 250 and the fourth pump 260 both feed a coolant outlet conduit 275 which is coupled with a first packed tower weir feed conduit 280 and a second packed tower weir feed conduit 290. The first packed tower weir feed conduit 280 conveys coolant to a first weir 300 within the quench chamber 50 which typically provides a curtain of coolant around the circumference of the quench chamber 50. The second packed tower weir feed conduit 290 feeds a second weir 310 in the combined wet electrostatic precipitator and packed tower 100 which typically provides a curtain of coolant around the circumference of the combined wet electrostatic precipitator and packed tower 100. The second packed tower weir feed conduit 290 is configured to convey a greater amount of coolant than the first packed tower weir feed conduit 280.

In operation, an effluent stream is provided together with any combustion reagents to the abatement chamber 40 and undergoes abatement. A heated abated effluent stream exits the abatement chamber 40 and enters the quench chamber 50 where it is cooled by the quench spray assembly 230. The quench chamber 50 is cooled by the first weir 300. The effluent stream passes into the drain chamber 60, as does coolant from the quench spray assembly 230 and the first weir 300. The cooled effluent stream passes through the gas conduit 70 to the sump chamber 90. The effluent stream then passes up through the combined wet electrostatic precipitator and packed tower 100. Further particulates within the cooled effluent stream are removed by the wet electrostatic precipitator and dissolvable compounds are removed from the cooled effluent stream by the packed tower. The effluent stream then passes to further downstream components (not shown) before being vented to atmosphere.

Meanwhile, the modular cooling assembly 130A, 130B recirculates coolant to facilitate cooling of the abatement apparatus 10. In particular, coolant typically laden with particulate matter is conveyed by the first pump 140 to the hydrocyclone 150. The hydrocyclone 150 separates particulates from the coolant and provides this as a slurry via the slurry conduit 160 back to the drain chamber 60. The hydrocyclone 150 also provides a particulate-depleted (cleaned) coolant to the heat exchanger 180. The heat exchanger 180 reduces the temperature of the received coolant and provides cooled coolant to the second pump 200. The second pump 200 pumps the cooled coolant to the quench spray assembly 230 which sprays the cooled coolant into the quench chamber 50 to cool the heated effluent stream. The second pump 200 also conveys the cooled coolant to the sieve 110. The cooled coolant is received by the sieve 110 and flows through the perforated base in the sieve 110 and through the combined wet electrostatic precipitator and packed tower 100 and on to the sump chamber 90. Any excess cooled coolant within the sieve 100 flows through the overflow 120 and into the sump chamber 90. The presence of the overflow 120 helps to prevent an overirrigation or flooding of coolant into the packed tower 100 causing an unacceptable back pressure against the flow of the effluent stream through the abatement apparatus 10.

The third pump 250 and the fourth pump 260 of the modular cooling assembly 130B together convey coolant from the sump chamber 90. The third pump 250 and the fourth pump 260 together provide coolant to the first weir 300 and the second weir 310.

Typically, the first pump 140 will pump coolant at around 66 litres per minute at 1 bar to the hydrocyclone 150 which provides slurry at 6 litres per minute and coolant to the heat exchanger 180 at 60 litres per minute. The heat exchanger 180 provides a 25°C temperature difference, giving around 100kW of cooling. The cooled coolant is typically supplied by the second pump 200 to the quench spray assembly 230 at a rate of around 40 litres per minute at 1 bar and at around 20 litres per minute to the sieve 110. The presence of the first pump 140 and the second pump 200 helps to accommodate the pressure drop across the hydrocyclone 150 and the heat exchanger 180. The parallel arrangement of the third pump 250 and the fourth pump 260 provides a flow rate of around 120 litres per minute at 1 bar. The coolant supplied to the first weir 300 is typically at a flow rate of around 20 litres per minute and the coolant supplied to the second weir 310 is typically at around 100 litres per minute.

In some embodiments, the abatement chamber 40 receives a silicon-containing gas such as silane, which produces silicon dioxide and/or a fluorine-containing gas such as nitrogen trifluoride, which produces hydrogen fluoride. The hydrogen fluoride is scrubbed out by the coolant in the combined wet electrostatic precipitator and packed tower 100 and this generates an aqueous solution of hydrogen fluoride in the sump chamber 90. The recirculation of the coolant enables the aqueous solution of hydrogen fluoride to be mixed with suspended silica in the slurry in the drain chamber 60 and this reacts to form hexafluorosilicic acid which has a lower vapour pressure above the solution which means that the combined wet electrostatic precipitator and packed tower 100 can scrub to lower levels of hydrogen fluoride.

### Differing Cooling Requirements

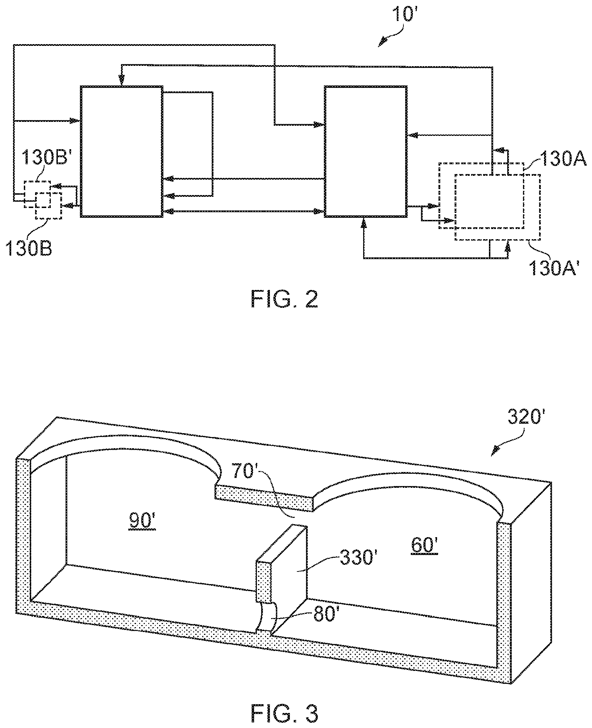

FIG. 2 shows an alternative abatement apparatus 10'. The cooling requirements for this abatement apparatus 10' are higher than that of the abatement apparatus 10. In this case, the cooling requirements are no more than double that of the abatement apparatus 10, and so in this case two modular cooling assemblies 130A, 130B, 130A', 130B' are provided. It will be appreciated that if more cooling is required, then additional integer numbers of the modular cooling assemblies 130A, 130B can be provided to meet those cooling needs. For example, if the modular cooling assembly 130A, 130B is configured to provide X kW of cooling and the abatement apparatus 10' requires Y kW of cooling, then the integer number N of modular cooling assemblies can be determined from *N = roundup (Y*/*X).* They together feed their own quench assemblies, the sieve and the weirs. However, each of the modular cooling assemblies are identical, which reduces the inventory required to produce abatement apparatus with differing cooling needs.

Furthermore, in some embodiments, a single identical, matching and/or mirrored pump is used for each of the first pump 140, second pump 200, third pump 250 and fourth pump 260, again to reduce inventory count.

### Combined Drain Chamber and Sump Chamber Module

FIG. 3 is a sectional view illustrating a combined drain chamber and sump chamber module 320' according to one embodiment that can be incorporated in place of the drain chamber 60 and sump chamber 90 mentioned above. The combined drain chamber and sump chamber module 320' has a drain chamber 60' and an adjacent sump chamber 90', partially separated by a separating wall 330' which defines a coolant balance conduit 80' below the expected coolant level and a gas conduit 70' above the expected coolant level.

Some embodiments provide an arrangement where water circulation (pumping) filtration, cooling and delivery (via spray nozzles) is broken down into units of discrete matched capacity, for example 100 kW. For a range of modular abatement systems, multiples of these elements are added as required. The circulation rate is defined by the maximum temperature of the water in the drain tank, the available cooling water temperature and the specification of the heat exchanger. Excess water over that required for the quench sprays is deposited onto the sieve plate of the packed tower, from which excess overflows to a sump below the packed tower. This cooled water is circulated to various locations within the abatement system. Typically a centrifugal water pump is used to take warm, acid and particulate-laden water from a drain tank or sump and pressurise it, causing it to flow through a hydrocyclone (for removal of particulate matter) a heat exchanger (usually of the parallel plate type) and then back to the various locations within the abatement system. A range of modular burner abatement systems is proposed comprising 2n discrete burner modules housed within a rectangular plenum mounted on a rectangular weir. The new approach to cooling and water management in some embodiments is as follows: a centrifugal pump takes water from a drain tank at around 66 I/min and passes it to a hydrocyclone where an underflow of around 10% containing the bulk of the particulate material is returned back to the sump with the remaining 60 I/min passing to a parallel plate heat exchanger. With a 25°C ΔT on the process side, this gives ~100 kW of cooling. The cooled water is presented to a block or pair of blocks forming manifolds containing spray nozzles, ideally flat fan type spray nozzles. These mount on opposite external faces of the rectangular weir, spraying through apertures cut into the walls and are advantageously arranged such that the sprays interleave across the void of the weir. Cooling blocks with their nozzles are also designed to give 100 kW increments of cooling. The pump circulates more water than is required for the spray nozzles; the excess is deposited on the sieve plate feeding the packed tower. This configuration is repeated 2, 3, 4, n times for systems designed with 200, 300, 400, n x100 kW heat capacities. The sieve plate also has a stand-pipe to define the height of water on the plate and thus the flow-rate of water down the tower. Excess water flows over the rim of the standpipe and down to the sump under the packed tower without passing through the packing. In one embodiment the aforementioned water pump is a two-stage pump with the stages in series and the hydrocyclone and heat exchanger plumbed between the stages. Note that the sump under the packed tower is not the same as the drain tank, as the former contains cooled, filtered water whereas the latter contains un-cooled particulate-laden water. A balance pipe may exist between the two to maintain constant level. A second pump takes water from the cold sump and lifts it to locations such as the weir, the water-walls of the wet electrostatic precipitator and the secondary cooling spray between the quench and the packed tower. The second pump may be the same two-stage pump used in the cooling modules, but with the stages in parallel. This modular approach minimises inventory and allows a wide range of products to be configured with minimal engineering overhead. It also provides a reduced spare parts burden. Variations may come in the specifications of the individual components, for example the modular increment may be for other cooling amounts, such as for example 50 kW or 80 kW.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

Abatement apparatus 10; 10'
First tower 20
Second tower 30
Abatement chamber 40
Quench chamber 50
Drain chamber 60; 60'
Gas conduit 70; 70'
Coolant balance conduit 80
Sump chamber 90; 90'
Combined wet electrostatic precipitator and packed tower 100
Sieve 110
Overflow 120
Modular cooling assembly 130a, 130b; 130a', 130b'
First pump 140
Hydrocyclone 150
Slurry conduit 160
Coolant conduit 170, 190, 210
Heat exchanger 180
Second pump 200
Quench conduit 220
Quench spray assembly 230
Sieve feed conduit 235
Third pump 250
Fourth pump 260
Feed conduit 270
Coolant outlet conduit 275
First packed tower weir feed conduit 280
Second packed tower weir feed conduit 290
First weir 300
Second weir 310
Combined drain chamber and sump chamber module 320'
Separating wall 330'

## Claims

1. A method of cooling an abatement apparatus (10) for abatement of an effluent stream from a semiconductor processing tool, the method comprising:
providing a plurality of modular cooling assemblies (130a, 130b) each having a cooling capacity X;
determining a cooling requirement Y of the abatement apparatus; and
incorporating into said abatement apparatus a number N of said modular cooling assemblies, wherein the number N is determined from N = roundup (Y/X), such that the cumulative cooling capacity matches or exceeds said cooling requirement of said abatement apparatus; and
wherein said providing comprises providing each modular cooling assembly with at least one pump (140) to recirculate coolant within said abatement apparatus to cool said abatement apparatus and providing each modular cooling assembly with a heat exchanger (180) to cool incoming coolant and provide outgoing coolant to cool said abatement apparatus (10).

2. The method of claim 1, wherein said providing comprises providing each modular cooling assembly with a first pump (140) configured to convey said coolant from a drain tank downstream of an abatement chamber (40) within a first tower (20) of said abatement apparatus (10) to cool said abatement apparatus.

3. The method of claim 1 or 2, wherein said providing comprises providing each modular cooling assembly with a separator (150) to separate particulates within said coolant to provide a particulate stream and a coolant stream to cool said abatement apparatus (10), preferably wherein said providing comprises configuring said separator (150) to convey said particulate stream to a drain tank.

4. The method of claim 3, when dependent from claim 2, wherein said providing comprises configuring said first pump (140), said separator (150) and said heat exchanger (180) in series to provide said outgoing coolant to cool said abatement apparatus (10), preferably wherein said providing comprises providing each modular cooling assembly with a second pump (200) located downstream of said first pump (140), said separator (150) and said heat exchanger (180) to provide said outgoing coolant to cool said abatement apparatus (10).

5. The method of any one of claims 2 to 4, wherein said providing comprises providing each modular cooling assembly with a quench sprayer (230) located downstream of said abatement chamber (40) and conveying said outgoing coolant to said quench sprayer to cool said first tower (20) of said abatement apparatus (10).

6. The method of any preceding claim, wherein said providing comprises providing each modular cooling assembly with a sieve feed conduit (235) located upstream of a sieve (110) within a second tower (30) of said abatement apparatus (10) and conveying said outgoing coolant to said sieve feed conduit to cool said second tower of said abatement apparatus, preferably wherein said providing comprises conveying said outgoing coolant in a greater quantity to said quench sprayer (230) than to said sieve feed conduit, more preferably wherein said providing comprises providing each modular cooling assembly with a further pump assembly configured to receive said coolant from a sump tank within said second tower of said abatement apparatus to cool said abatement apparatus.

7. The method of claim 6, wherein said providing comprises configuring said further pump assembly to convey said coolant to a first weir (300) of said first tower (20) to cool said abatement apparatus

8. The method of any one of claims 6 to 7, wherein said providing comprises configuring said further pump assembly to convey said coolant to a second weir (310) of said second tower (30) to cool said abatement apparatus, preferably wherein said providing comprises conveying said coolant in a greater quantity to said second weir (310) than to said first weir (300).

9. The method of any one of claims 6 to 8, wherein said further pump assembly comprises third (250) and fourth pumps (260) arranged in parallel.

10. The method of any preceding claim, wherein each pump (140, 200, 250, 260) of said modular cooling assembly is identical.

11. The method of any one of claims 6 to 10, comprising providing said sieve (110) with an overflow (120) configured to convey excess head of coolant from said sieve to said sump tank.

12. The method of any one of claims 6 to 11, comprising providing said abatement apparatus (10) with an effluent stream conduit fluidly coupling an above-coolant region of said drain tank with an above-coolant region of said sump tank, preferably comprising providing said abatement apparatus with a coolant balance conduit (80) fluidly coupling a coolant region of said drain tank with a coolant region of said sump tank.

13. The method of claim 12, wherein said providing comprises conveying said coolant in a greater quantity to said second tower than said first tower to provide a net flow of coolant through said coolant balance conduit (80) from said second tower (30) to said first tower (20).

## Patentansprüche

1. Verfahren zum Kühlen einer Minderungsvorrichtung (10) zur Minderung eines Auslassstroms aus einer Halbleiterverarbeitungsanlage, wobei das Verfahren umfasst:
Bereitstellen einer Mehrzahl modularer Kühlanordnungen (130a, 130b), die jeweils eine Kühlkapazität X aufweisen;
Bestimmen einer Kühlanforderung Y der Minderungsvorrichtung und
Aufnehmen einer Anzahl N der modularen Kühlanordnungen in die Minderungsvorrichtung, wobei die Anzahl N aus N = Aufrundung (Y/X) bestimmt wird, so dass die kumulative Kühlkapazität mit der Kühlanforderung der Minderungsvorrichtung übereinstimmt oder dieselbe übersteigt; und
wobei das Bereitstellen umfasst, jede modulare Kühlanordnung mit zumindest einer Pumpe (140) zum Rezirkulieren von Kühlmittel innerhalb der Minderungsvorrichtung zu versehen, um die Minderungsvorrichtung zu kühlen, und jede modulare Kühlanordnung mit einem Wärmetauscher (180) zu versehen, um eingeleitetes Kühlmittel zu kühlen und ausgeleitetes Kühlmittel zum Kühlen der Minderungsvorrichtung (10) bereitzustellen.

2. Verfahren nach Anspruch 1, wobei das Bereitstellen umfasst, jede modulare Kühlanordnung mit einer ersten Pumpe (140) zu versehen, die dazu konfiguriert ist, das Kühlmittel aus einem Ablasstank stromabwärts einer Minderungskammer (40) innerhalb eines ersten Turms (20) der Minderungsvorrichtung (10) zu leiten, um die Minderungsvorrichtung zu kühlen.

3. Verfahren nach Anspruch 1 oder 2, wobei das Bereitstellen umfasst, jede modulare Kühlanordnung mit einem Separator (150) zum Separieren von Teilchen in dem Kühlmittel zu versehen, um einen Teilchenstrom und einen Kühlmittelstrom zum Kühlen der Minderungsvorrichtung (10) bereitzustellen, wobei das Bereitstellen bevorzugt umfasst, den Separator (150) dazu auszubilden, den Teilchenstrom zu einem Ablasstank zu leiten.

4. Verfahren nach Anspruch 3, wenn abhängig von Anspruch 2, wobei das Bereitstellen umfasst, die erste Pumpe (140), den Separator (150) und den Wärmetauscher (180) in Reihe zu konfigurieren, um das ausgeleitete Kühlmittel zum Kühlen der Minderungsvorrichtung (10) bereitzustellen, wobei das Bereitstellen bevorzugt umfasst, jede modulare Kühlanordnung mit einer zweiten Pumpe (200) zu versehen, die sich stromabwärts der ersten Pumpe (140) befindet, wobei der Separator (150) und der Wärmetauscher (180) zum Bereitstellen des ausgeleiteten Kühlmittels bestimmt sind, um die Minderungsvorrichtung (10) zu kühlen.

5. Verfahren nach einem der Ansprüche 2 bis 4, wobei das Bereitstellen umfasst, jede modulare Kühlanordnung mit einer Quench-Sprüheinrichtung (230) zu versehen, die sich stromabwärts der Minderungskammer (40) befindet, und das ausgeleitete Kühlmittel zu der Quench-Sprüheinrichtung zu leiten, um den ersten Turm (20) der Minderungsvorrichtung (10) zu kühlen.

6. Verfahren nach einem der vorhergehenden Ansprüche, wobei das Bereitstellen umfasst, jede modulare Kühlanordnung mit einer Siebzufuhrleitung (235) zu versehen, die sich stromaufwärts eines Siebs (110) innerhalb eines zweiten Turms (30) der Minderungsvorrichtung (10) befindet, und das ausgeleitete Kühlmittel zu der Siebzufuhrleitung zu leiten, um den zweiten Turm der Minderungsvorrichtung zu kühlen, wobei das Bereitstellen bevorzugt umfasst, das ausgeleitete Kühlmittel in größerer Menge zu der Quench-Sprüheinrichtung (230) als zu der Siebzufuhrleitung zu leiten, wobei das Bereitstellen besonders bevorzugt umfasst, jede modulare Kühlanordnung mit einer weiteren Pumpanordnung zu versehen, die dazu konfiguriert ist, das Kühlmittel aus einem Sumpftank innerhalb des zweiten Turms der Minderungsvorrichtung aufzunehmen, um die Minderungsvorrichtung zu kühlen.

7. Verfahren nach Anspruch 6, wobei das Bereitstellen umfasst, die weitere Pumpanordnung dazu auszubilden, das Kühlmittel zu einem ersten Wehr (300) des ersten Turms (20) zu leiten, um die Minderungsvorrichtung zu kühlen.

8. Verfahren nach einem der Ansprüche 6 bis 7, wobei das Bereitstellen umfasst, die weitere Pumpanordnung zum Leiten des Kühlmittels zu einem zweiten Wehr (310) des zweiten Turms (30) zu konfigurieren, um die Minderungsvorrichtung zu kühlen, wobei das Bereitstellen bevorzugt umfasst, das Kühlmittel in größerer Menge zu dem zweiten Wehr (310) als zu dem ersten Wehr (300) zu leiten.

9. Verfahren nach einem der Ansprüche 6 bis 8, wobei die weitere Pumpanordnung dritte (250) und vierte Pumpen (260) umfasst, die parallelgeschaltet sind.

10. Verfahren nach einem der vorhergehenden Ansprüche, wobei jede Pumpe (140, 200, 250, 260) der modularen Kühlanordnung identisch ist.

11. Verfahren nach einem der Ansprüche 6 bis 10, umfassend, das Sieb (110) mit einem Überlauf (120) zu versehen, der dazu konfiguriert ist, überschüssiges Kühlmittel von dem Sieb zu dem Sumpftank zu leiten.

12. Verfahren nach einem der Ansprüche 6 bis 11, umfassend, die Minderungsvorrichtung (10) mit einer Auslassstromleitung zu versehen, die einen Bereich des Ablasstanks über dem Kühlmittel fluidtechnisch mit einem Bereich des Sumpftanks über dem Kühlmittel koppelt, bevorzugt umfassend, die Minderungsvorrichtung mit einer Kühlmittelausgleichsleitung (80) zu versehen, die einen Kühlmittelbereich des Ablasstanks fluidtechnisch mit einem Kühlmittelbereich des Sumpftanks koppelt.

13. Verfahren nach Anspruch 12, wobei das Bereitstellen umfasst, das Kühlmittel in größerer Menge zu dem zweiten Turm als zu dem ersten Turm zu leiten, um einen Netto-Strom von Kühlmittel durch die Kühlmittelausgleichsleitung (80) von dem zweiten Turm (30) zu dem ersten Turm (20) bereitzustellen.

## Revendications

1. Procédé de refroidissement d'un appareil de dépollution (10) pour la dépollution d'un courant d'effluent provenant d'un outil de traitement de semi-conducteur, le procédé comprenant :
• la fourniture d'une pluralité d'ensembles de refroidissement modulaires (130a, 130b) ayant chacun une capacité de refroidissement X ;
• la détermination d'une exigence de refroidissement Y dudit appareil de dépollution ; et
• l'incorporation dans ledit appareil de dépollution d'un nombre N desdits ensembles de refroidissement modulaires, dans lequel le nombre N est déterminé à partir de *N* = arrondi sup(*Y*/*X*), de sorte que la capacité de refroidissement cumulée corresponde à ou dépasse ladite exigence de refroidissement dudit appareil de dépollution ; et
• dans lequel ladite fourniture comprend la fourniture à chaque ensemble de refroidissement modulaire d'au moins une pompe (140) pour faire recirculer du liquide de refroidissement à l'intérieur dudit appareil de dépollution afin de refroidir ledit appareil de dépollution et la fourniture à chaque ensemble de refroidissement modulaire d'un échangeur de chaleur (180) pour refroidir le liquide de refroidissement entrant et fournir du liquide de refroidissement sortant pour refroidir ledit appareil de dépollution (10).

2. Procédé selon la revendication 1, dans lequel ladite fourniture comprend la fourniture à chaque ensemble de refroidissement modulaire d'une première pompe (140) configurée pour transporter ledit liquide de refroidissement depuis un réservoir de vidange en aval d'une chambre de dépollution (40) à l'intérieur d'une première tour (20) dudit appareil de dépollution (10) pour refroidir ledit appareil de dépollution.

3. Procédé selon la revendication 1 ou 2, dans lequel ladite fourniture comprend la fourniture à chaque ensemble de refroidissement modulaire d'un séparateur (150) pour séparer des particules à l'intérieur dudit liquide de refroidissement afin de fournir un courant de particules et un courant de liquide de refroidissement pour refroidir ledit appareil de dépollution (10), de préférence dans lequel ladite fourniture comprend la configuration dudit séparateur (150) pour transporter ledit courant de particules vers un réservoir de vidange.

4. Procédé selon la revendication 3 lorsqu'elle dépend de la revendication 2, dans lequel ladite fourniture comprend la configuration de ladite première pompe (140), dudit séparateur (150) et dudit échangeur de chaleur (180) en série pour fournir ledit liquide de refroidissement sortant afin de refroidir ledit appareil de dépollution (10), de préférence dans lequel ladite fourniture comprend la fourniture à chaque ensemble de refroidissement modulaire d'une deuxième pompe (200) située en aval de ladite première pompe (140), dudit séparateur (150) et dudit échangeur de chaleur (180) pour fournir ledit liquide de refroidissement sortant afin de refroidir ledit appareil de dépollution (10).

5. Procédé selon l'une quelconque des revendications 2 à 4, dans lequel ladite fourniture comprend la fourniture à chaque ensemble de refroidissement modulaire d'un pulvérisateur de trempe (230) situé en aval de ladite chambre de dépollution (40) et le transport dudit liquide de refroidissement sortant vers ledit pulvérisateur de trempe pour refroidir ladite première tour (20) dudit appareil de dépollution (10).

6. Procédé selon l'une quelconque des revendications précédentes, dans lequel ladite fourniture comprend la fourniture à chaque ensemble de refroidissement modulaire d'un conduit d'alimentation de tamis (235) situé en amont d'un tamis (110) à l'intérieur d'une seconde tour (30) dudit appareil de dépollution (10) et le transport dudit liquide de refroidissement sortant vers ledit conduit d'alimentation de tamis pour refroidir ladite seconde tour dudit appareil de dépollution, de préférence dans lequel ladite fourniture comprend le transport dudit liquide de refroidissement sortant en une plus grande quantité vers ledit pulvérisateur de trempe (230) que vers ledit conduit d'alimentation de tamis, plus préférablement dans lequel ladite fourniture comprend la fourniture à chaque ensemble de refroidissement modulaire d'un autre ensemble de pompe configuré pour recevoir ledit liquide de refroidissement depuis un réservoir de puisard à l'intérieur de ladite seconde tour dudit appareil de dépollution pour refroidir ledit appareil de dépollution.

7. Procédé selon la revendication 6, dans lequel ladite fourniture comprend la configuration dudit autre ensemble de pompe pour transporter ledit liquide de refroidissement vers un premier déversoir (300) de ladite première tour (20) pour refroidir ledit appareil de dépollution.

8. Procédé selon l'une quelconque des revendications 6 à 7, dans lequel ladite fourniture comprend la configuration dudit autre ensemble de pompe pour transporter ledit liquide de refroidissement vers un second déversoir (310) de ladite seconde tour (30) pour refroidir ledit appareil de dépollution, de préférence dans lequel ladite fourniture comprend le transport dudit liquide de refroidissement en une plus grande quantité vers ledit second déversoir (310) que vers ledit premier déversoir (300).

9. Procédé selon l'une quelconque des revendications 6 à 8, dans lequel ledit autre ensemble de pompe comprend des troisième (250) et quatrième (260) pompes disposées en parallèle.

10. Procédé selon l'une quelconque des revendications précédentes, dans lequel chaque pompe (140, 200, 250, 260) dudit ensemble de refroidissement modulaire est identique.

11. Procédé selon l'une quelconque des revendications 6 à 10, comprenant la fourniture dudit tamis (110) avec un trop-plein (120) configuré pour transporter une charge d'excès de liquide de refroidissement depuis ledit tamis vers ledit réservoir de puisard.

12. Procédé selon l'une quelconque des revendications 6 à 11, comprenant la fourniture dudit appareil de dépollution (10) avec un conduit de courant d'effluent couplant fluidiquement une région au-dessus du liquide de refroidissement dudit réservoir de vidange avec une région au-dessus du liquide de refroidissement dudit réservoir de puisard, de préférence comprenant la fourniture dudit appareil de dépollution avec un conduit d'équilibrage de liquide de refroidissement (80) couplant fluidiquement une région de liquide de refroidissement dudit réservoir de vidange avec une région de liquide de refroidissement dudit réservoir de puisard.

13. Procédé selon la revendication 12, dans lequel ladite fourniture comprend le transport dudit liquide de refroidissement en une plus grande quantité vers ladite seconde tour que vers ladite première tour pour fournir un flux net de liquide de refroidissement à travers ledit conduit d'équilibrage de liquide de refroidissement (80) depuis ladite seconde tour (30) vers ladite première tour (20).
